(19) Europäisches Patentamt
European Patent Office
Office européen des brevets

(11) EP 3 147 324 B1

(12) # EUROPEAN PATENT SPECIFICATION

(45) Date of publication and mention of the grant of the patent:
**26.09.2018 Bulletin 2018/39**

(21) Application number: **15187068.0**

(22) Date of filing: **28.09.2015**

(51) Int Cl.:
***C08L 23/14*** *(2006.01)*
***C08F 210/06*** *(2006.01)*
***B32B 27/32*** *(2006.01)*
***F16L 9/12*** *(2006.01)*
***B32B 1/08*** *(2006.01)*

(54) **POLYPROPYLENE PIPES WITH IMPROVED PRESSURE RESISTANCE**

POLYPROPYLENROHREN MIT ERHÖHTER DRUCKFESTIGKEIT

TUYAUX DE POLYPROPYLÈNE PRÉSENTANT UNE MEILLEURE RÉSISTANCE À LA PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.03.2017 Bulletin 2017/13**

(73) Proprietor: **Borealis AG**
**1220 Vienna (AT)**

(72) Inventors:
- **Stubenrauch, Kurt**
  **4021 Linz (AT)**
- **Braun, Hermann**
  **4040 Linz (AT)**
- **Boragno, Luca**
  **4030 Pichling (AT)**

(74) Representative: **Lux, Berthold**
**Maiwald Patentanwalts- und Rechtsanwaltsgesellschaft mbH**
**Elisenhof**
**Elisenstraße 3**
**80335 München (DE)**

(56) References cited:
**WO-A1-2014/001394**
**WO-A1-2014/095946**
**WO-A1-2014/173530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 147 324 B1

## Description

The present invention relates to a polypropylene composition comprising a component A being a propylene copolymer and a component B being a long-chain branched propylene homopolymer or copolymer. The invention also relates to the use of the polypropylene composition for the manufacture of pipes as well as to a pipe comprising such polypropylene composition.

Polymer materials are normally used for pipe application purposes, such as fluid transport, e.g. water or natural gas. The temperature of the transported fluid generally is in the range of about 0 °C to about 70 °C. Pipes made of polymer materials are generally made of polyolefins, usually polyethylene or polypropylene. In high temperature applications like for example, hot water transportation, pipes made of polyolefins must be able to withstand high temperature and pressure in order to secure a long-life term. Polypropylene has good thermal resistance properties compared to other polyolefins which make it a suitable material for hot water, pressure and industrial pipe applications. The continuous improvement of polypropylene in this type of application is an essential condition for the ongoing polypropylene pipe market growth. Expanding the mechanical properties, such as temperature and pressure resistance performance, of polypropylene for pressure pipe application is a key element for this development. Other mechanical properties in polypropylene such as stiffness, toughness and compression strength are generally improved by blending polypropylene with a propylene polymer having strain hardening behaviour. A propylene polymer having strain hardening behaviour is generally associated to having long-chain branching present in its polymer backbone.

EP1382638 (in the name of BOREALIS GmbH) describes a polypropylene composition with improved ratio of stiffness and toughness comprising a component A which comprises a propylene homopolymer or copolymer, a component B which comprises a propylene polymer having a strain hardening behaviour and a component C which comprises a β-nucleating agent. The propylene polymer having strain hardening behaviour comprised in component B presents long-chain branching in its polymer backbone. However EP1382638 does not relate to the improvement of pressure resistance performance in a pipe comprising such composition. Additionally, the use of a β-nucleating agent in the polypropylene composition adds more complexity and higher costs to the polypropylene composition, its processability and its applications.

EP1301343 (in the name of BOREALIS GmbH) describes a single layer and multilayer foam pipe with improved compression strength. Such foam pipe comprises a polypropylene blend which comprises a component A selected from modified propylene polymer having long-chain branching in its polymer backbone, a compound B selected from a propylene homopolymer and copolymer and optionally a nucleating agent. Although EP1301343 describes a polymer blend comprising a modified propylene polymer having long-chain branching in its polymer backbone, it is silent about the improvement of pressure resistance in pipes comprising such polypropylene blend. The main limitation of the polypropylene blend described in EP1301343 is that the application of such a blend is only described for foamed pipe.

WO 2014/095946 A1 (in the name of BOREALIS GmbH) describes a polypropylene blend comprising: (a) Component (A) being a copolymer of propylene and a C4-C12 α-olefin, and having 2,1 regio-defects of more than 0.40 % determined by 13C-NMR spectroscopy, and (b) Component (B) being a propylene homo- or copolymer having 2,1 regio-defects of 0.40 % or less determined by 13C-NMR spectroscopy, wherein the polypropylene blend is not β-nucleated.

WO 2014/173530 A1 (in the name of BOROUGE) discloses a polypropylene composition suitable for pipe applications comprising a propylene random copolymer with at least one comonomer selected from alpha-olefins with 2 or 4 to 8 carbon atoms, wherein the polypropylene composition has a melt flow rate $MFR_2$ (2.16 kg, 230°C) of 0.05 to 1.0 g/10 min, determined according to ISO 1133, a polydispersity index (PI) of 2.0 to 7.0, and a Charpy Notched Impact Strength at 0°C of more than 4.0 kJ/m2, determined according to ISO 179/1eA:2000 using notched injection moulded specimens.

Therefore there still exists a need for a polypropylene composition with thermal and pressure resistance, thus being suitable for applications where the articles are used at high temperature and pressure.

## Invention

The above mentioned disadvantages have now been overcome by providing a polypropylene composition comprising:

a) a component A being a propylene copolymer-1 (PC-1) having a melt flow rate $MFR_2$, as measured at 230 °C under a load of 2.16 kg, in the range of 0.05 to 0.5 g/10min as measured according to ISO 1133,
and
b) a component B being a long-chain branched propylene homopolymer or copolymer having a melt flow rate $MFR_2$, as measured at 230 °C under a load of 2.16 kg, in the range of 0.5 to 10 g/10min as measured according to ISO 1133,
characterized in that such composition has

c) a v30 melt extensibility in the range of 150 to 250 cN wherein the v30 melt extensibility is measured according to ISO 16790:2005,

d) a pressure resistance of at least 350 h under a stress level of 5 MPa at 95 °C when measured according to ISO 1167 from a pipe sample consisting of such composition and wherein such composition is not β-nucleated.

The polypropylene composition according to the present invention improves the pressure resistance properties of pipes by keeping other properties such as resistance to deformation and impact strength on a high level.

An additional advantage of the polypropylene composition according to the present invention is the absence of a β-nucleating agent in such inventive composition. Generally β-nucleating agents are expensive and some of them tend to add some colour to the polypropylene composition to which they are added. Thus having a non β-nucleated polypropylene composition allows to save costs and to prevent the undesirable pigmentation caused by the β-nucleating agent. Additionally, the absence of the β-nucleating agent in the inventive polypropylene composition increases the processing window of such inventive composition during the preparation of articles, e.g. pipes, since the inventive polypropylene composition becomes less sensitive to process parameter variations.

**Description of the invention**

The present invention provides a polypropylene composition comprising:

a) a component A being a propylene copolymer-1 (PC-1) having a melt flow rate $MFR_2$, as measured at 230 °C under a load of 2.16 kg, in the range of 0.05 to 0.5 g/10min as measured according to ISO 1133
and

b) a component B being a long-chain branched propylene homopolymer or copolymer having a melt flow rate $MFR_2$, as measured at 230 °C under a load of 2.16 kg, in the range of 0.5 to 10 g/10min as measured according to ISO 1133,
characterized in that such composition has

c) a v30 melt extensibility in the range of 150 to 250 cN wherein the v30 melt extensibility is measured according to ISO 16790:2005,

d) a pressure resistance of at least 350 h under a stress level of 5 MPa at 95 °C when measured according to ISO 1167 from a pipe sample consisting of such composition
and wherein such composition is not β-nucleated.

According to the present invention the expression "propylene homopolymer" relates to a polypropylene that consists substantially, i.e. of at least 99.0 wt%, more preferably of at least 99.5 wt%, still more preferably of at least 99.8 wt%, like at least 99.9 wt% of propylene units. In another embodiment only propylene units are detectable, i.e. only propylene has been polymerized.

According to the present invention the expression "propylene copolymer" relates to a copolymer comprising units derived from propylene and at least one comonomer selected from ethylene and $C_4$-$C_{20}$ alpha-olefins, preferably ethylene or at least a $C_4$-$C_{12}$ alpha-olefin. Accordingly the propylene copolymer comprises units derived from propylene and at least one linear or branched comonomer selected from the group consisting of ethylene, $C_4$ alpha-olefin, $C_5$ alpha-olefin, $C_6$ alpha-olefin, $C_7$ alpha-olefin, $C_8$ alpha-olefin, $C_9$ alpha-olefin and $C_{10}$ alpha-olefin. More preferably the propylene copolymer comprises units derived from propylene and at least one comonomer selected from ethylene or linear $C_4$-$C_{10}$ alpha-olefin, more preferably selected from ethylene, 1-butene, 1-pentene, 1-hexene, 1-heptene, 1-octene, 1-nonene and 1-decene, wherein ethylene, 1-butene and 1-hexene are preferred. It is particularly preferred that the propylene copolymer consists of units derived from propylene and ethylene.

The expression "propylene copolymer-1 (PC-1)" relates to a propylene copolymer as described above.

The propylene copolymer-1 (PC-1) according to the present invention can have an amount of units derived from ethylene and/or $C_4$-$C_{20}$ alpha-olefins in the range of 5.0 to 8.0 mol%, preferably in the range of 5.0 to 7.5 mol%, more preferably in the range of 5.0 to 7.0 mol%. A suitable lower limit is 5.0 mol%. A suitable upper limit is 8.0 mol %, preferably 7.5 mol %, more preferably 7.0 mol %. The lower and upper indicated values of the ranges are included. In case more than one type of comonomer is used the above indicated amounts relate to the total of all comonomers used.

Generally the melt flow rate ($MFR_2$) for the propylene copolymer-1 (PC-1) is between 0.05 and 0.5 g/10min. The $MFR_2$ for the propylene copolymer-1 (PC-1) is determined according to ISO 1133, at a temperature of 230 °C and under a load of 2.16 kg. Irrespective of the exact nature of the propylene copolymer-1 (PC-1) it is preferred that the $MFR_2$ is between 0.08 and 0.4 g/10min, more preferably the $MFR_2$ is between 0.12 and 0.3 g/10min. A suitable lower limit is 0.05 g/10min, preferably 0.08 g/10min, more preferably 0.12 g/10min. A suitable upper limit is 0.50 g/10min, preferably 0.40 g/10min, more preferably 0.30 g/10min. The lower and upper indicated values of the ranges are included.

The propylene copolymer-1 (PC-1) can be a propylene random copolymer comprising at least two fractions:

a) a high molecular weight fraction (HMWF)
and

b) a low molecular weight fraction (LMWF)

As well known, in case the $MFR_2$ of one of the high molecular weight fraction or low molecular weight fraction cannot be measured, then it can be calculated using the below formula (1):

$$\ln(MFR_2 \text{ of the propylene random copolymer }) = x\,(\ln(MFR_2 \text{ of the high molecular weight fraction })) + (1-x)(\ln(MFR_2 \text{ of the low molecular weight fraction})) \quad \text{Formula (1),}$$

wherein $MFR_2$ of the propylene random copolymer is measured according to ISO 1133;
x = the weight ratio of the high molecular weight fraction based on the combined weight of the high molecular weight fraction and the low molecular weight fraction (=1).

Generally the melt flow rate ($MFR_2$) of the high molecular weight fraction (HMWF) comprised in the propylene random copolymer is between 0.005 and 0.15 g/10min, preferably the $MFR_2$ is between 0.007 and 0.12 g/10min, more preferably the $MFR_2$ is between 0.01 and 0.1 g/10min. A suitable lower limit is 0.005 g/10min, preferably 0.007 g/10min, more preferably 0.01 g/10min. A suitable upper limit is 0.15 g/10min, preferably 0.12 g/10min, more preferably 0.1 g/10min. The lower and upper indicated values of the ranges are included.

The amount of units derived from ethylene and/or $C_4$-$C_{20}$ alpha-olefins in the high molecular weight fraction (HMWF) comprised in the propylene random copolymer are generally in the range of 4.0 to 7.5 mol%, preferably in the range of 5.0 to 7.5 mol%, more preferably in the range of 5.5 to 7.0 mol%. A suitable lower limit is 4.0 mol%, preferably 5.0 mol%, more preferably 5.50 mol%. A suitable upper limit is 7.5 mol%, preferably 7.0 mol%. The lower and upper indicated values of the ranges are included. In case more than one type of comonomer is used the above indicated amounts relate to the total of all comonomers used.

Generally the melt flow rate ($MFR_2$) of the low molecular weight fraction (LMWF) comprised in the propylene random copolymer is between 0.006 and 5.0 g/10min, preferably the $MFR_2$ is between 0,.4 and 3.5 g/10min, more preferably the $MFR_2$ is between 0.16 and 3.0 g/10min. A suitable lower limit is 0.006 g/10min, preferably 0.04 g/10min, more preferably 0.16 g/10min. A suitable upper limit is 5.0 g/10min, preferably 3.5 g/10min, more preferably 3.0 g/10min. The lower and upper indicated values of the ranges are included.

The amount of units derived from ethylene and/or $C_4$-$C_{20}$ alpha-olefins in the low molecular weight fraction (LMWF) comprised in the propylene random copolymer is in the range of 0 to 10.0 mol%, preferably in the range of 1.0 to 8.0 mol%, more preferably in the range of 3.0 to 7.0 mol%. A suitable lower limit is 0 mol%, preferably 1.0 mol%, more preferably 3.0 mol%. A suitable upper limit is 10.0 mol%, preferably 8.0 mol%, more preferably 7.0 mol%. The lower and upper indicated values of the ranges are included. In case more than one type of comonomer is used the above indicated amounts relate to the total of all comonomers used.

Generally the weight ratio between the high molecular weight fraction (HMWF) and the low molecular weight fraction (LMWF), comprised in the propylene random copolymer, is 65/35 to 35/65,

Generally the propylene copolymer-1 (PC-1) has a molecular weight distribution (MWD) in the range of 6.0 to 15.0 as calculated using the formula (2). Preferably the propylene copolymer-1 (PC-1) has a molecular weight distribution (MWD) in the range of 7.0 to 14.0, more preferably in the range of 8.0 to 14.0, as calculated using formula (2).

$$MWD = M_w/M_n \quad \text{Formula (2),}$$

wherein: $M_w$ is the weight average molecular weight of the propylene copolymer-1 (PC-1) and $M_n$ is the number average molecular weight of the propylene copolymer-1 (PC-1).

The propylene copolymer-1 (PC-1) for used in the preparation of the polypropylene composition according to the invention is generally produced in a polymerization processes and under conditions well-known to the man skilled in the art of making polypropylene polymers. The propylene copolymer-1 (PC-1) is generally produced by copolymerising propylene with the comonomers in the amounts previously described.

Generally a polymerisation catalyst will be present in the polymerisation process. The polymerisation catalyst typically comprises a transition metal compound and an activator. A suitable polymerisation catalyst known in the art is generally a Ziegler-Natta catalyst.

A Ziegler-Natta type catalyst typically used for propylene polymerisation and/or copolymerisation will be a stereospecific, solid, high yield Ziegler-Natta catalyst component comprising as main components Mg, Ti and Cl. In addition to the solid catalyst component, a cocatalyst(s) as well as external donor(s) will generally be used in the polymerisation process.

The components of the catalyst may be supported on a particulate support, such as inorganic oxide, like silica or alumina, or, usually, a magnesium halide may form the solid support. It is also possible that the catalyst components are not supported on an external support, but the catalyst is prepared by an emulsion-solidification method or by a precipitation method, as is well-known by the man skilled in the art of catalyst preparation.

The solid catalyst usually also comprises at least one electron donor (internal electron donor) and optionally aluminium.

Suitable external electron donors used in the polymerisation are well known in the art and include ethers, ketones, amines, alcohols, phenols, phosphines and silanes.

Examples of suitable Ziegler-Natta catalysts and components in the catalysts are described among others in WO87/07620, WO92/21705, WO93/11165, WO93/11166, WO93/19100, WO97/36939, WO98/12234, WO99/33842, WO03/000756, WO03/000757, WO03/000754, WO03/000755, WO2004/029112, EP2610271, WO2012/007430, WO92/19659, WO92/19653, WO92/19658, US4382019, US4435550, US4465782, US4473660, US4560671, US5539067, US5618771, EP45975, EP45976, EP45977, WO95/32994, US4107414, US4186107, US4226963, US4347160, US4472524, US4522930, US4530912, US4532313, US4657882, US4581342, US4657882.

The process for polymerising propylene or copolymerising propylene with the comonomers previously described is known in the state of the art. Such a polymerisation process generally comprises at least one polymerisation stage however the polymerisation process may also comprise additional polymerisation stages. The polymerisation at each stage is generally carried out in solution, slurry, bulk or gas phase. In one particular embodiment the process contains at least one bulk reactor stage and at least one gas phase reactor stage, each stage comprising at least one reactor and all reactors being arranged in cascade. In one particularly preferred embodiment the polymerisation process comprises at least one bulk reactor and at least one gas phase reactor arranged in that order. In some preferred processes the process comprises one bulk reactor and at least two gas phase reactors, e.g. two or three gas phase reactors. The process may further comprise pre- and post reactors. Pre-reactors comprise typically prepolymerisation reactors. In this kind of processes high polymerisation temperatures are generally used in order to achieve specific properties of the polymers. Typical temperatures in all processes are 70 °C or higher, preferably 80 °C or higher, more preferably 85 °C or higher. The high polymerisation temperatures as mentioned above are generally applied either in some or all reactors of the reactor cascade.

As mentioned above the polypropylene composition according to the present invention also comprises a component (B) being a long-chain branched propylene homopolymer or copolymer.

Unless explicitly stated to the contrary in the following the term "propylene copolymer" denotes the polymer material that has been previously defined.

Unless explicitly stated to the contrary in the following the term "propylene homopolymer" denotes the polymer material that has been previously defined.

The melt flow rate ($MFR_2$) of the long-chain branched propylene homopolymer or copolymer according to the present invention generally is in the range of 0.5 to 10.0 g/10min. Preferably, the $MFR_2$ for said long-chain branched propylene homopolymer or copolymer is in the range of 1.0 and 8.0 g/10min, more preferably in the range of 1.0 to 5.0 g/10min. The $MFR_2$ for the long-chain branched propylene homopolymer or copolymer is determined according to ISO standard 1133, at a temperature of 230 °C and under a load of 2.16 kg. A suitable lower limit is 0.50 g/10min, preferably 1.0 g/10min. A suitable upper limit is 10.0 g/10min, preferably 8.0 g/10min, more preferably 5.0 g/10min. The lower and upper indicated values of the $MFR_2$ ranges are included.

The F30 melt strength of the long-chain branched propylene homopolymer or copolymer is measured according to ISO 16790:2005 and is generally in the range of 18.0 to 50.0 cN, preferably in the range of 20.0 to 45.0 cN, more preferably in the range of 21.0 to 40.0 cN. A suitable lower limit is 18.0 cN, preferably 20.0 cN, more preferably 21.0 cN. A suitable upper limit is 50.0 cN, preferably 45.0 cN more preferably 40.0 cN. The lower and upper indicated values of the F30 melt strength ranges are included.

The long-chain branched propylene homopolymer or copolymer according to the present invention can have a v30 melt extensibility measured according to ISO 16790:2005, in the range of 200 to 275 mm/s, preferably in the range of 225 to 265 mm/s, more preferably in the range of 230 to 260 mm/s. A suitable lower limit is 200 mm/s, preferably 225 mm/s, more preferably 230 mm/s. A suitable upper limit is 275 mm/s, preferably 265 mm/s, more preferably 260 mm/s. The lower and upper indicated values of the v30 melt extensibility ranges are included.

The long-chain branched propylene homopolymer or copolymer according to the present invention generally is produced for instance using any suitable process as known in the art, e.g. by a reaction of a propylene polymer with a thermally decomposing free radical-forming agent and/or by a treatment of a propylene polymer with ionizing radiation, where both cases may optionally be accompanied or followed by a reaction with a functionally unsaturated compound.

The term "propylene polymer" relates to a propylene homopolymer or to a propylene copolymer as described before. The term "propylene polymer" can also relate to a mixture of the above described propylene homopolymer and propylene copolymer. The propylene polymer can preferably be the so called propylene random copolymer as described above.

The propylene homopolymer and the propylene copolymer related to the term propylene polymer is generally produced in a polymerization processes and under conditions as described before.

The propylene polymer can have, in the propylene copolymer, an amount of units derived from ethylene and/or $C_4$-$C_{20}$ alpha-olefins in the range of 3.7 to 7.3 mol%, preferably in the range of 4.0 to 7.0 mol%, more preferably in the range of 4.5 to 6.5 mol%. A suitable lower limit is 3.7 mol%, preferably 4.0 mol%, more preferably 4.5 mol%. A suitable upper limit is 7.3 mol%, preferably 7.0 mol%, more preferably 6.5 mol%. The lower and upper indicated values of the ranges are included. In case more than one type of comonomer is used the above indicated amounts relate to the total of all comonomers used.

Further process may be suitable for the production of the long-chain branched propylene homopolymer or copolymer, provided that the resulting long-chain branched propylene homopolymer or copolymer meets the characteristics as required regarding the F30 melt strength and v30 melt extensibility values according to the present invention.

A preferred process for the production of the long-chain branched propylene homopolymer or copolymer is such a process where the propylene polymer is reacted with a thermally decomposing free radical-forming agent and optionally with a functionally unsaturated compound chosen from:

a) at least one bifunctionally unsaturated monomer and/or polymer
or
b) at least one multifunctionally unsaturated monomer and/or polymer
or
c) a mixture of (a) and (b).

Generally peroxides are used as thermally decomposing free radical-forming agents. Preferably the thermally decomposing free radical-forming agent is selected from the group comprising acyl peroxide, alkyl peroxide, hydroperoxide, perester, peroxycarbonate and mixtures of any of them. The following listed peroxides are particularly preferred:

a) acyl peroxides (ACPER): benzoyl peroxide, 4-chlorobenzoyl peroxide, 3-methoxybenzoyl peroxide and/or methyl benzoyl peroxide.

b) alkyl peroxides (ALPER): allyl t-butyl peroxide, 2,2-bis(t-butylperoxybutane), 1,1 -bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

c) peresters and peroxy carbonates (PER): butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed thermally decomposing free radical-forming agents. So for example the following combinations are possible:

i) ACPER and ALPER
ii) ACPER and PER
iii) ALPER and PER
iv) ACPER and ALPER and PER

The man skilled in the art knows how to choose the appropriate thermally decomposing free radical-forming agent that will thermally decompose during the preferred process for the production of the long-chain branched propylene homopolymer or copolymer according to the present invention. For example the man skilled in the art will consider the

decomposition temperature of the thermally decomposing free radical-forming agent with respect to the temperature used in the preferred process for the production of the long-chain branched propylene homopolymer or copolymer.

In the preferred process for the production of the long-chain branched propylene homopolymer or copolymer, the propylene polymer is generally mixed with 0.25 to 1.00 parts per weight (ppw) of thermally decomposing free radical-forming agent per 100 parts per weight of propylene polymer.

"Bifunctionally unsaturated or multifunctionally unsaturated" as used above means the presence of respectively two or more non-aromatic double bonds. Generally, only those bifunctionally or multifunctionally unsaturated compounds are used which can be polymerized with the aid of free radicals. Preferably the bifunctionally unsaturated monomers are chosen from:

- divinyl compounds, such as for example divinylaniline, m-divinylbenzene, p-divinylbenzene, divinylpentane and divinylpropane;
- allyl compounds, such as for example allyl acrylate, allyl methacrylate, allyl methyl maleate and allyl vinyl ether;
- dienes, such as for example 1,3-butadiene, chloroprene, cyclohexadiene, cyclopentadiene, 2,3-dimethylbutadiene, heptadiene, hexadiene, isoprene and 1,4-pentadiene;
- aromatic and/or aliphatic bis (maleimide) bis (citraconimide);
- and mixtures of any of these unsaturated monomers.

Especially preferred bifunctionally unsaturated monomers are 1,3-butadiene, isoprene, dimethyl butadiene and divinylbenzene. The bifunctionally unsaturated polymers are preferably polymers comprising at least one of the above mentioned bifunctionally unsaturated monomers. The multifunctionally unsaturated polymer contains more than one unsaturated monomer as described above. Examples of such polymers including oligomers are

- polybutadienes, especially where the different microstructures in the polymer chain, i.e. 1,4-cis, 1,4-trans and 1,2-(vinyl) are predominantly in the 1,2-(vinyl) configuration,
- copolymers of butadiene and styrene having the 1,2-(vinyl) configuration in the polymer chain.

A preferred polymer is polybutadiene, in particular a polybutadiene having more than 50.0 wt% of the butadiene in the 1,2-(vinyl) configuration. The 1,2-(vinyl) configuration is determined by $^{1}H$ and $^{13}C$ NMR spectroscopy.

In the preferred process for the production of the long-chain branched propylene homopolymer or copolymer, optionally at least one functionally unsaturated compound is used next to the thermally decomposing free radical-forming agent. Usually not more than three different functionally unsaturated compounds are used; preferably one functionally unsaturated compound is used.

In the preferred process for the production of the long-chain branched propylene homopolymer or copolymer the optionally at least one functionally unsaturated compound can be used in a concentration of 0.4 to 2.5 parts per weight (ppw) of optionally at least one functionally unsaturated compound per 100 parts per weight of propylene polymer.

A more preferred process for the production of the long-chain branched propylene homopolymer or copolymer is such a process comprising the steps: mixing the propylene polymer, with a thermally decomposing free radical-forming agent and optionally with at least one functionally unsaturated compound at a temperature of 20 to 100 °C for at least 2 minutes to form a pre-mixed material and melt mixing the pre-mixed material in a melt mixing device at a barrel temperature in the range of 180 to 300 °C.

It should be understood that when at least one thermally decomposing free radical-forming agent and optionally at least one functionally unsaturated compound are used, the addition of the at least one thermally decomposing free radical-forming agent and the optionally at least one functionally unsaturated compound may be achieved in various manners, known by the man skilled in the art, for example: at once in a mixing step or split up in two additions: a first addition in a mixing step and a second addition in a melt-mixing step. Complete addition of the at least one thermally decomposing free radical-forming agent and the optionally at least one functionally unsaturated compound in a mixing step is preferred.

The optionally at least one functionally unsaturated compound is generally added to and mixed with the propylene polymer and the at least one thermally decomposing free radical-forming agent in the form of a masterbatch composition during the process for the production of the long-chain branched propylene homopolymer or copolymer.

The mixing step of the propylene polymer with at least one thermally decomposing free radical-forming agent and optionally with at least one functionally unsaturated compound to form a pre-mixed material is generally carried out in a powder mixing device, like a horizontal mixer with paddle stirrer. The mixing step is generally carried out at a temperature range of 20 to 100 °C, preferably at a temperature range of 30 to 90 °C, more preferably at a temperature range of 40 to 80 °C. The residence time of the propylene polymer in the mixing step is usually at least 2 minutes, preferably in the range of 5 to 30 minutes, more preferably in the range of 8 to 20 minutes. Following the mixing step, the pre-mixed material is then melt mixed at a barrel temperature in the range of 180 to 300 °C, which is not necessarily

constant over the complete melt-mixing step. The barrel temperature is preferably in the range of 200 to 280 °C. The pre-mixed material is preferably melt-mixed in a continuous melt mixing device like for example a single screw extruder, a co-rotating twin screw extruder or a co-rotating kneader. Preferably, the melt mixing device includes a feed zone, a kneading zone and a die zone. More preferably, a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of 180 to 260 °C. Barrel temperature T2 (in the kneading zone) is preferably in the range of 260 to 300 °C. Barrel temperature T3 (in the die zone) is preferably in the range of 220 to 280 °C. The screw speed of the melt mixing device can be adjusted depending on the material characteristics. The man skilled in the art is well familiar with this and can easily determine the appropriate screw speed. Generally the screw speed is adjusted to a range from 100 to 750 rotations per minute (rpm), preferably to a range from 150 to 650 rotations per minute (rpm). Following the melt-mixing step, the resulting long-chain branched propylene homopolymer or copolymer melt is generally pelletized, for example in an underwater pelletizer or after solidification of one or more strands in a water bath, in a strand pelletizer.

The polypropylene composition according to the present invention can further comprise additives. Such additives are generally conventional additives for pipe application, including without limiting to, clarifiers, brighteners, acid scavengers, antioxidants, slip agents, inorganic fillers, processing aid agents, antistatic agents, antiblocking agents and reinforcing agents. It has to be understood that since the polypropylene composition according to the present invention is not β-nucleated, any β-nucleating agent is excluded from the additive list.

The total amount of additives present in the polypropylene composition according to the invention is generally of not more than 10.0 wt%, preferably in an amount of not more than 5.0 wt%, more preferably in an amount of not more than 3.0 wt%, even more preferably in an amount of not more than 1.5 wt% based on the total weight of the polypropylene composition according to the invention.

The above mentioned additives are generally added in form of a master-batch mixed with a polymer component used as a carrier polymer. Therefore a polymer component other than component A or component B may be present in the polypropylene composition according to the invention. Preferably the polypropylene composition according to the invention consists of the component A and the component B as the polymer components. The term "polymer components" excludes herein any carrier polymer of additive product, e.g. a carrier polymer of additive(s) in a well-known master-batch, in case the additive is present in the inventive composition in form of a master-batch. The amount of such optional carrier polymers are calculated to the amount of the respective additive based on the amount (100 %) of the composition of the invention.

The term "β-nucleating agent" has a well know meaning in the polypropylene field and is different from the so called α-nucleating agent, which causes α-modification of the polymer, as well known in the art. Examples of known β-nucleating agents, which are excluded from the polymer composition according to the present invention, comprise:

a) dicarboxylic acid derivative type diamide compounds from $C_5$-$C_8$ cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, e.g.

- N,N'-di-$C_5$-$C_8$-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide,
- N,N'-di-$C_5$-$C_8$-cycloalkyl-4,4-biphenyldicarboxamide compounds such as N,N'-dicyclohexyl-4,4-biphenyldicarboxamide and N,N'-dicyclopentyl-4,4-biphenyl-dicarboxamide,
- N,N'-di-$C_5$-$C_8$-cycloalkyl-terephthalamide compounds such as N,N'-dicyclohexyl-terephthalamide and N,N'-dicyclopentylterephthalamide,
- N,N'-di-$C_5$-$C_8$-cycloalkyl-1,4-cyclohexanedicarboxamide compounds such as N,N'-dicyclo-hexyl-1,4-cyclohexanedicarboxamide and N,N'-dicyclohexyl-1,4-cyclo-pentanedicarboxamide,

b) diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g.

- N,N'-$C_6$-$C_{12}$-arylene-bis-benzamide compounds such as N,N'-p-phenylene-bis-benzamide and N,N'-1,5-naphthalene-bis-benzamide,
- N,N'-$C_5$-$C_8$-cycloalkyl-bis-benzamide compounds such as N,N'-1,4-cyclopentane-bisbenzamide and N,N'-1,4-cyclohexane-bis-benzamide,
- N,N'-p-$C_6$-$C_{12}$-arylene-bis-$C_5$-$C_8$-cycloalkylcarboxamide compounds such as N,N'-1,5-naphthalene-bis-cyclohexanecarboxamide and N,N'-1,4-phenylene-bis-cyclohexane-carboxamide, and
- N,N-$C_5$-$C_8$-cyloalkyl-bis-cyclohexanecarboxamide compounds such as N,N'-1,4-cyclopentane-bis-cyclohexanecarboxamide and N,N'-1,4-cyclohexane-bis-cyclo-hexanecarboxamide,

c) amino acid derivative type diamide compounds from amidation reaction of $C_5$-$C_8$-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$-aromatic mono-amines, e.g.

- N-phenyl-5-(N-benzoylamino)pentaneamide and N-cyclohexyl-4-(N-cyclohexyl-carbonylamino)benzamide,

d) quinacridone type compounds, e.g. quinacridone, dimethylquinacridone and dimethoxyquinacridone,
e) quinacridonequinone type compounds, e.g. quinacridonequinone, a mixed crystal of 5,12-dihydro(2,3b)acridine-7,14-dione with quino(2,3b)acridine-6,7,13,14-(5H,12H)-tetrone and dimethoxyquinacridonequinone,
f) dihydroquinacridone type compounds, e.g. dihydroquinacridone, dimethoxy-dihydroquinacridone and dibenzodihydroquinacridone,
g) dicarboxylic acid salts of metals from group IIa of periodic system, e.g. pimelic acid calcium salt and suberic acid calcium salt,
h) mixtures of dicarboxylic acids and salts of metals from group IIa of periodic system,
i) salts of metals from group IIa of periodic system and imido acids of the formula

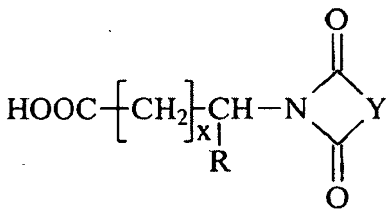

wherein x = 1 to 4; R is selected from H, -COOH, $C_1$-$C_{12}$-alkyl, $C_5$-$C_8$-cycloalkyl or $C_6$-$C_{12}$-aryl, and Y is selected from $C_1$-$C_{12}$-alkyl, $C_5$-$C_8$-cycloalkyl or $C_6$-$C_{12}$-aryl-substituted bivalent $C_6$-$C_{12}$-aromatic residues, e.g. calcium salts of phthaloylglycine, hexahydrophthaloylglycine, N-phthaloylalanine and/or N-4-methylphthaloylglycine.

Generally the polypropylene composition according to the present invention has a F30 melt strength measured according to ISO 16790:2005, in the range of 30 to 60 cN, preferably in the range of 30 to 50 cN, more preferably in the range of 35 to 50 cN. A suitable lower limit is 30 cN, preferably 35 cN. A suitable upper limit is 60 cN, preferably 50 cN. The lower and upper indicated values of the F30 melt strength ranges are included.

The polypropylene composition according to the present invention generally has a v30 melt extensibility measured according to ISO 16790:2005, in the range of 150 to 250 mm/s, preferably in the range of 160 to 240 mm/s, more preferably in the range of 175 to 225 mm/s. A suitable lower limit is 150 mm/s, preferably 160 mm/s, more preferably 175 mm/s. A suitable upper limit is 250 mm/s, preferably 240 mm/s, more preferably 225 mm/s. The lower and upper indicated values of the v30 melt extensibility ranges are included.

The melt flow rate ($MFR_2$) of the polypropylene composition according to the present invention generally is in the range of 0.05 to 0.50 g/10min. Preferably, the $MFR_2$ for said polypropylene composition is in the range of 0.10 to 0.40 g/10min, more preferably in the range of 0.15 to 0.35 g/10min. The $MFR_2$ for the polypropylene composition is determined according to ISO standard 1133, at a temperature of 230 °C and under a load of 2.16 kg. A suitable lower limit is 0.05 g/10min, preferably 0.10 g/10min, more preferably 0.15 g/10min. A suitable upper limit is 0.50 g/10min, preferably 0.40 g/10min, more preferably 0.35 g/10min. The lower and upper indicated values of the $MFR_2$ ranges are included.

The polypropylene composition according to the invention can comprise:

a) 99.0 to 70.0 wt%, preferably 97.0 to 75.0 wt%, more preferably 95.0 to 80.0 wt% of the component A.
b) 1.0 to 30.0 wt% preferably 3.0 to 25.0 preferably 5.0 to 20.0 wt% of the component B,

based on the combined amount of component A and component B.

The polypropylene composition according to the present invention is generally prepared using any of the methods known by the man skilled in the art. An illustrative example of the polypropylene composition preparation is a melt-mixing process involving the mixing of component A with component B in the desired weight percent using a batch or a continuous melt-mixing device. Examples of typical batch melt-mixing devices are the Banbury and the heated roll mill. The melt-mixing process is generally carried out at a barrel temperature in the range of 180 to 300 °C, which is not necessarily constant over the complete melt-mixing process. The barrel temperature is preferably in the range of 200 to 280 °C. The melt-mixing process involving the mixing of component A with component B for the preparation of the polymer composition according to the invention is preferably carried out in a continuous melt-mixing device like for example a single screw extruder, a co-rotating twin screw extruder or a co-rotating kneader. More preferably, the melt

mixing device includes a feed zone, a kneading zone and a die zone. Even more preferably, a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of 180 to 240 °C. Barrel temperature T2 (in the kneading zone) is preferably in the range of 240 to 300 °C. Barrel temperature T3 (in the die zone) is preferably in the range of 240 to 280 °C. The screw speed of the melt-mixing device can be adjusted depending on the material characteristics. The man skilled in the art is well familiar with this and can easily determine the appropriate screw speed. Generally the screw speed is adjusted to a range from 100 to 750 rotations per minute (rpm), preferably to a range from 150 to 650 rotations per minute (rpm). Following the melt-mixing process, the resulting polypropylene composition melt is generally pelletized, for example in an underwater pelletizer or after solidification of one or more strands in a water bath, in a strand pelletizer.

The invention also provides an extruded article comprising the polypropylene composition according to the invention.

Suitable articles comprising the polypropylene composition according to the invention are for example pipes or moulded articles, like injection moulded or blow moulded articles. Preferred articles are a pipe or a fitting for pipe.

The invention further provides a pipe comprising a polypropylene composition according to the invention.

The pipe comprising the polypropylene composition according to the invention generally has good mechanical properties as described above and shown below in the experimental part. Thus, the pipe according to the invention generally qualifies as a pressure pipe, preferably as a hot water and industrial pipe.

The present invention also provides a pipe comprising the polypropylene composition according to the invention, characterized in that the pipe is a single layer pipe or a multilayer pipe, wherein at least one layer of the multilayer pipe comprises the polypropylene composition according to the invention.

In a single layer pipe, the pipe layer generally comprises the polypropylene composition according to the invention, preferably the pipe layer consists of the polypropylene composition according to the invention.

In a multilayer pipe, the at least one layer of the multilayer pipe generally comprises the polypropylene composition according to the invention, preferably the at least one layer of the multilayer pipe consists of the polypropylene composition according to the invention.

The fitting for pipe according to the invention generally comprises the polypropylene composition according to the invention, preferably the fitting for pipe consists of the polypropylene composition according to the invention.

The present invention is also concern with a pipe according to the invention characterized in that the pipe has a pressure test performance measured according to ISO 1167 of at least 350 h under a stress level of 5 MPa and at a temperature of 95 °C.

Preferably the pipe according to the invention has a pressure test performance in the range of 350 to 600 h, more preferably in the range of 380 to 820 h, under a stress level of 5 MPa at a temperature of 95 °C and measured according to ISO 1167.

The invention further provides a process for producing a pipe according to the invention comprising the steps of:

a) mixing the polypropylene composition comprising the component A, the component B and the optional additives using mechanical mixing means
and
b) extruding the polymer to a form of a pipe.

The pipe according to the invention is generally produced according to the methods known in the art. Thus, according to one preferred method the inventive polypropylene composition is extruded through an annular die to a desired internal diameter, after which the inventive polypropylene composition is cooled down.

The extruder preferably operates at a relatively low temperature and therefore excessive heat build-up should be avoided. Extruders having a high length to diameter ratio L/D more than 15, preferably of at least 20 and in particular of at least 25 are preferred. The modern extruders typically have an L/D ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). Vacuum pressure is applied in the outside of the extrudate so that the plastic is pressed against the wall of the tube.

According to another method the extrudate leaving the die is directed into a tube having a perforated section in the centre. A slight vacuum is drawn through the perforation to hold the pipe against the walls of the sizing chamber. After the sizing the pipe is cooled, typically in a water bath having a length of about 5 metres or more.

The fitting for pipe according to the invention is generally produced using the methods and equipment known in the art. Thus, according to one preferred method the polypropylene composition according to the invention is moulded, preferably injection moulded or blown moulded, more preferably injection moulded, in a conventional manner using conventional moulding equipment, to a shape of a fitting for a pipe.

Finally the present invention is also directed to the use of a polypropylene composition according to the invention for the manufacture of single layer pipe or at least one layer of a multilayer pipe.

**EXAMPLES**

The following definitions of terms and determination methods apply for the above general description of the invention as well as to the below examples unless otherwise defined.

**I- Measuring methods**

**a) Comonomer content**

Quantitative nuclear-magnetic resonance (NMR) spectroscopy was used to quantify the comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of 1,2-tetrachloroethane-$d_2$ (TCE-$d_2$) along with chromium (III) acetylacetonate ($Cr(acac)_3$) resulting in a 65 mM solution of relaxation agent in solvent {1}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {2, 3}. A total of 6144 (6k) transients were acquired per spectra.

Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed {4} and the comonomer fraction calculated as the fraction of ethylene in the polymer with respect to all monomer in the polymer:

$$fE = ( E / ( P + E )$$

The comonomer fraction was quantified using the method of Wang et. al. {5} through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction:

$$E [mol\%] = 100 * fE$$

The weight percent comonomer incorporation was calculated from the mole fraction:

$$E [wt\%] = 100 * ( fE * 28.06 ) / ( (fE * 28.06) + ((1-fE) * 42.08) )$$

References:

1-Singh, G., Kothari, A., Gupta, V., Polymer Testing 28 5 (2009), 475.

2- Zhou, Z., Kuemmerle, R., Qiu, X., Redwine, D., Cong, R., Taha, A., Baugh, D. Winniford, B., J. Mag. Reson. 187 (2007) 225.
3- Busico, V., Carbonniere, P., Cipullo, R., Pellecchia, R., Severn, J., Talarico, G., Macromol. Rapid Commun. 2007, 28, 1128.
4- Cheng, H. N., Macromolecules 17 (1984), 1950.
5- Wang, W-J., Zhu, S., Macromolecules 33 (2000), 1157.

**b) Pressure resistance**

The pressure resistance is measured according to ISO 1167:2006 parts 1 and 2. Pipes in the nominal dimension of 32 x 3 $mm^2$ are extruded and cut to a length suitable for the test. Proper end caps are fixed to the pipes and hydrostatic pressure is applied on the inside of the pipe, in order to achieve the desired hoop stress level on the pipe. After applying the pressure, the time at which the specimen fails is measured and considered as failure time of the pipe. The test is conducted according to Iso 1167:2006 in a water inside - water outside configuration.

**c) Molecular weight distribution of propylene copolymer-1 (PC-1)**

Molecular weight averages ($M_z$, $M_w$ and $M_n$), Molecular weight distribution (MWD) described by MWD= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (3)$$

$$M_w = \frac{\sum_{i=1}^{N} (A_i x\, M_i)}{\sum_{i=1}^{N} A_i} \quad (4)$$

$$M_z = \frac{\sum_{i=1}^{N} (A_i\, x\, M_i^2)}{\sum_{i=1}^{N} (A_i * M_i)} \quad (5)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3}\ mL/g, \qquad a_{PS} = 0.655$$

$$K_{PE} = 39 \times 10^{-3}\ mL/g, \qquad a_{PE} = 0.725$$

$$K_{PP} = 19 \times 10^{-3}\ mL/g, \qquad a_{PP} = 0.725$$

A third order polynomial fit was used to fit the calibration data.

All samples were prepared in the concentration range of 0.5 -1 mg/ml and dissolved at 160 °C for 2.5 hours for PP under continuous gentle shaking.

**d) Melt flow rate**

The melt flow rate (MFR) is determined according to ISO 1133 and is indicated in g/10min. The MFR is an indication of the flowability and hence the processability of the polymer. The higher the melt flow rate, the lower the viscosity of the polymer. The $MFR_2$ of polypropylene is determined at a temperature of 230 °C and under a load of 2.16 kg.

**e) F30 melt strength and V30 melt extensibility**

The test described herein follows ISO 16790:2005. An apparatus according to Fig. 1 of ISO 16790:2005 is used.

The strain hardening behaviour is determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). For measuring F30 melt strength and v30 melt extensibility, the pressure at the extruder exit (= gear pump entry) is set to 30 bars by by-passing a part of the extruded polymer.

The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero). Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/$sec^2$. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30 melt extensibility values respectively

**II- Inventive and comparative examples**

**a) Inventive examples.**

The obtained mixture of component (A) and component (B) of inventive polypropylene compositions (IE1, IE2 and IE3) were prepared in a Coperion ZSK 32MC twin-screw extruder at a melt temperature of 260 °C using a screw speed of 220 rpm and an extruder throughput of 75 kg/h. the temperature profile was set as follow: 230-240-250-260°C. Component A (propylene copolymer (PC-1) is fed in the main hopper and component B (long-chain branched propylene homopolymer or copolymer is fed through a side feeder port. A screw configuration comprising 3 mixing zones was used. The string obtained from the extruder is then cooled down and pelletized using an underwater pelletizer.

Component (A) is a propylene random copolymer grade RA130E commercialised by Borealis and having an $MFR_2$ of 0.25 g/10min and a density of 905 kg/$m^3$.

Component (B) was prepared by pre-mixing 0.4 parts per weight (ppw) of tert-butylperoxy isopropyl carbonate (trigonox® BPIC-C75) per 100 parts per weight of propylene random copolymer grade RA130E powder and 1.5 parts per weight (ppw) of butadiene (BD) per 100 parts per weight of propylene random copolymer grade RA130E powder, prior to the melt-mixing step in a horizontal mixer with paddle stirrer at a temperature of 65 °C, maintaining an average residence time of 15 minutes. The pre-mixture was transferred under inert atmosphere to a co-rotating twin screw extruder of the type Theyson TSK60 having a barrel diameter of 60 mm and an L/D-ratio of 48 equipped with a high intensity mixing screw having three kneading zones and a two-step degassing setup. A melt temperature profile with initial temperature T1=240 °C in the feed zone, maximum temperature T2= 280 °C in the last kneading zone and a final temperature T3=230 °C in the die zone, all temperatures being defined as barrel temperature, was selected. The screw speed was set at 350 rpm at a throughput of 225 kg/h.

Following the melt-mixing step, the resulting polymer melt was pelletized after solidification of the strands in a

water bath in an underwater pelletizer at a water temperature of 40 °C.

**b) Comparative example.**

The comparative example (CE1) is a propylene random copolymer grade RA130E commercialised by Borealis.

Table 1: Characterization of inventive polypropylene compositions (IE1, IE2 and IE3) and comparative example (CE1)

| Example | Component A (wt%) | Component B (wt%) | Pressure resistance (hr), 95°C, 5MPa | F30 (cN) | v30 (mm/s) |
|---|---|---|---|---|---|
| CE1 | 100 | 0 | 264 | 58.4 | 167 |
| IE1 | 95 | 5 | 828 | 39.5 | 202 |
| IE2 | 90 | 10 | 476 | 42.8 | 215 |
| IE3 | 80 | 20 | 396 | 49.4 | 225 |

Even if the comparative example (CE1) meets the requirements for a pressure pipe, from Table 1 it can be derived that the inventive polypropylene compositions present a further improved pressure resistance compared to the comparative example. It can also be derived that the inventive examples present higher v30 melt extensibility compared to the comparative example CE1.

## Claims

1. Polypropylene composition comprising:

    a) a component A being a propylene copolymer-1 (PC-1) having a melt flow rate $MFR_2$, as measured at 230 °C under a load of 2.16 kg, in the range of 0.05 to 0.5 g/10min as measured according to ISO 1133, and
    b) a component B being a long-chain branched propylene homopolymer or copolymer having a melt flow rate $MFR_2$, as measured at 230 °C under a load of 2.16 kg, in the range of 0.5 to 10 g/10min as measured according to ISO 1133,
    **characterized in that** such composition has
    c) a v30 melt extensibility in the range of 150 to 250 mm/s wherein the v30 melt extensibility is measured according to ISO 16790:2005,
    d) a pressure resistance of at least 350 h under a stress level of 5 MPa at 95 °C when measured according to ISO 1167 from a pipe sample consisting of such composition

    and wherein such composition is not β-nucleated.

2. Polypropylene composition according to claim 1 **characterized in that** such composition has an F30 melt strength in the range of 30 to 60 cN wherein the F30 melt strength is measured according to ISO 16790:2005.

3. Polypropylene composition according to any one of claim 1 to 2 **characterized in that**

    a) the propylene copolymer-1 (PC-1) has a comonomer selected from ethylene or $C_4$-$C_{20}$ alpha-olefin and any combination thereof and/or
    b) the propylene polymer used in the preparation of the long-chain branched propylene copolymer has a comonomer in the copolymer selected from ethylene or $C_4$-$C_{20}$ alpha-olefin and any combination thereof.

4. Polypropylene composition according to any one of claim 1 to 3 **characterized in that**

    a) the propylene copolymer-1 (PC-1) has a comonomer content in the range of 5.0 to 8.0 mol% and/or
    b) the propylene polymer used in the preparation of the long-chain branched propylene copolymer has a comonomer content in the copolymer in the range of 3.7 to 7.3 mol%.

**5.** Polypropylene composition according to any one of claim 1 to 4 **characterized in that**

a) the propylene copolymer-1 (PC-1), being a propylene random copolymer, comprises at least two fractions:

i. a high molecular weight fraction (HMWF) having a melt flow rate $MFR_2$ (230°C) in the range of 0.005 to 0.15 g/10min
and
ii. a low molecular weight fraction (LMWF) having a melt flow rate $MFR_2$ (230°C) in the range of 0.006 to 5.0 g/10min
and/or

b) the long-chain branched propylene homopolymer or copolymer has

i. a v30 melt extensibility in the range of 200 to 275 mm/s wherein the v30 melt extensibility is measured according to ISO 16790:2005 and
ii. a F30 melt strength in the range of 18 to 50 cN wherein the F30 melt strength is measured according to ISO 16790:2005.

**6.** Polypropylene composition according to claim 5 **characterized in that** the propylene copolymer-1 (PC-1), being a propylene random copolymer, has:

a) a comonomer content in the range of 4.0 to 7.5 mol% in the high molecular weight fraction (HMWF)
and
b) a comonomer content in the range of 0 to 10.0 mol% in the low molecular weight fraction (LMWF).

**7.** Polypropylene composition according to claim 6 **characterized in that** the weight ratio between the high molecular weight fraction (HMWF) and the low molecular weight fraction (LMWF) is 65/35 to 35/65.

**8.** Polypropylene composition according to any one of claim 1 to 7 **characterized in that** the propylene copolymer-1 (PC-1) has a molecular weight distribution in the range of 6.0 to 15.0.

**9.** Polypropylene composition according to any one of claim 1 to 7 **characterized in that** such polypropylene composition comprises:

a) 99.0 to 70.0 wt% of component A
and
b) 1.0 to 30.0 wt% of component B,
based on the combined amount of component A and component B.

**10.** Polypropylene composition according to any one of claim 1 to 9 **characterized in that** such polypropylene composition has a melt flow rate $MFR_2$, as measured at 230 °C under a load of 2.16 kg, in the range of 0.05 to 0.5 g/lOmin as measured according to ISO 1133.

**11.** Polypropylene composition according to any one of claim 1 to 10 **characterized in that** the long-chain branched propylene homopolymer or copolymer is obtainable by, mixing the propylene polymer, with a thermally decomposing free radical-forming agent and optionally with at least one functionally unsaturated compound at a temperature of 20 to 100 °C for at least 2 minutes to form a pre-mixed material and melt mixing the pre-mixed material in a melt mixing device at a barrel temperature in the range of 180 to 300 °C.

**12.** Extruded article comprising the polypropylene composition according to any one of claim 1 to 11.

**13.** Pipe comprising a polypropylene composition according to any one of claim 1 to 11.

**14.** Pipe according to claim 13 **characterized in that** the pipe is a single layer pipe or a multilayer pipe, wherein at least one layer of the multilayer pipe comprises the polypropylene composition according to any one of claim 1 to 11.

**15.** Pipe according to claim 13 or 14 **characterized in that** the pipe has a pressure test performance measured according to ISO 1167 of least 350 h under a stress level of 5 MPa and at a temperature of 95 °C.

**16.** Process for producing a pipe according to any one of claims 13 to 15 comprising the steps of:

a) mixing the polypropylene composition comprising the component A, the component B and the optional additives using mechanical mixing means
and
b) extruding the polymer to a form of a pipe.

**17.** Use of a polypropylene composition according to any one of claim 1 to 11 for the manufacture of single layer pipe or at least one layer of a multilayer pipe.

## Patentansprüche

**1.** Polypropylen-Zusammensetzung, umfassend:

a) eine Komponente A, die ein Propylen-Copolymer-1 (PC-1) mit einer Schmelze-Fließ-Rate $MFR_2$, wenn bei 230°C unter einer Last von 2,16 kg gemessen, im Bereich von 0,05 bis 0,5 g/10 min, wenn gemäß ISO 1133 gemessen, ist
und
b) eine Komponente B, die ein langkettiges verzweigtes Propylen-Homopolymer oder -Copolymer mit einer Schmelze-Fließ-Rate $MFR_2$, wenn bei 230°C unter einer Last von 2,16 kg gemessen, im Bereich von 0,5 bis 10 g/10 min, wenn gemäß ISO 1133 gemessen, ist,
**dadurch gekennzeichnet, dass** diese Zusammensetzung aufweist
c) eine v30-Schmelzedehnbarkeit im Bereich von 150 bis 250 mm/s, wobei die v30-Schmelzedehnbarkeit gemäß ISO 16790:2005 gemessen wird,
d) eine Druckfestigkeit von mindestens 350 h bei einer Beanspruchung von 5 MPa bei 95°C, wenn gemäß ISO 1167 gemessen, aus einer Rohrprobe, bestehend aus einer solchen Zusammensetzung,
und wobei diese Zusammensetzung nicht β-nukleiert ist.

**2.** Polypropylen-Zusammensetzung nach Anspruch 1, **dadurch gekennzeichnet, dass** diese Zusammensetzung eine F30-Schmelzfestigkeit im Bereich von 30 bis 60 cN aufweist, wobei die F30-Schmelzfestigkeit gemäß ISO 16790:2005 gemessen wird.

**3.** Polypropylen-Zusammensetzung nach einem von Anspruch 1 bis 2, **dadurch gekennzeichnet, dass**

a) das Propylen-Copolymer-1 (PC-1) ein Comonomer, ausgewählt aus Ethylen oder $C_4$-$C_{20}$-alpha-Olefin und einer beliebigen Kombination davon, aufweist, und/oder
b) das bei der Herstellung des langkettigen verzweigten Propylen-Copolymers verwendete Propylen-Polymer ein Comonomer in dem Copolymer, ausgewählt aus Ethylen oder $C_4$-$C_{20}$-alpha-Olefin und einer beliebigen Kombination davon, aufweist.

**4.** Polypropylen-Zusammensetzung nach einem von Anspruch 1 bis 3, **dadurch gekennzeichnet, dass**

a) das Propylen-Copolymer-1 (PC-1) einen Comonomer-Gehalt im Bereich von 5,0 bis 8,0 Mol-% aufweist, und/oder
b) das bei der Herstellung des langkettigen verzweigten Propylen-Copolymers verwendete Propylen-Polymer einen Comonomer-Gehalt im Copolymer im Bereich von 3,7 bis 7,3 Mol-% aufweist.

**5.** Polypropylen-Zusammensetzung nach einem von Anspruch 1 bis 4, **dadurch gekennzeichnet, dass**

a) das Propylen-Copolymer-1 (PC-1), das ein statistisches Propylen-Copolymer ist, mindestens zwei Fraktionen umfasst:

i. eine hochmolekulare Gewichts-Fraktion (HMWF) mit einer Schmelze-Fließ-Rate $MFR_2$ (230°C) im Bereich von 0,005 bis 0,15 g/10 min,
und
ii. eine niedermolekulare Gewichts-Fraktion (LMWF) mit einer Schmelze-Fließ-Rate $MFR_2$ (230°C) im Bereich von 0,006 bis 5,0 g/10 min,

und/oder

b) das langkettige verzweigte Propylen-Homopolymer oder -Copolymer aufweist

i. eine v30-Schmelzedehnbarkeit im Bereich von 200 bis 275 mm/s, wobei die v30-Schmelzedehnbarkeit gemäß ISO 16790:2005 gemessen wird,
und
ii. eine F30-Schmelzfestigkeit im Bereich von 18 bis 50 cN, wobei die F30-Schmelzfestigkeit gemäß ISO 16790:2005 gemessen wird.

**6.** Polypropylen-Zusammensetzung nach Anspruch 5, **dadurch gekennzeichnet, dass** das Propylen-Copolymer-1 (PC-1), das ein statistisches Propylen-Copolymer ist, aufweist:

a) einen Comonomer-Gehalt im Bereich von 4,0 bis 7,5 Mol-% in der hochmolekularen Gewichts-Fraktion (HMWF)
und
b) einen Comonomer-Gehalt im Bereich von 0 bis 10,0 Mol-% in der niedermolekularen Gewichts-Fraktion (LMWF).

**7.** Polypropylen-Zusammensetzung nach Anspruch 6, **dadurch gekennzeichnet, dass** das Gewichtsverhältnis zwischen der hochmolekularen Gewichts-Fraktion (HMWF) und der niedermolekularen Gewichts-Fraktion (LMWF) 65/35 bis 35/65 beträgt.

**8.** Polypropylen-Zusammensetzung nach einem von Anspruch 1 bis 7, **dadurch gekennzeichnet, dass** das Propylen-Copolymer-1 (PC-1) eine Molekulargewichts-Verteilung im Bereich von 6,0 bis 15,0 aufweist.

**9.** Polypropylen-Zusammensetzung nach einem von Anspruch 1 bis 7, **dadurch gekennzeichnet, dass** diese Polypropylen-Zusammensetzung umfasst:

a) 99,0 bis 70,0 Gew.-% der Komponente A
und
b) 1,0 bis 30,0 Gew.-% der Komponente B,
basierend auf der kombinierten Menge von Komponente A und Komponente B.

**10.** Polypropylen-Zusammensetzung nach einem von Anspruch 1 bis 9, **dadurch gekennzeichnet, dass** diese Polypropylen-Zusammensetzung eine Schmelze-Fließ-Rate $MFR_2$, wenn bei 230°C unter einer Last von 2,16 kg gemessen, im Bereich von 0,05 bis 0,5 g/10 min, wenn gemäß ISO 1133 gemessen, aufweist.

**11.** Polypropylen-Zusammensetzung nach einem von Anspruch 1 bis 10, **dadurch gekennzeichnet, dass** das langkettige verzweigte Propylen-Homopolymer oder -Copolymer durch Mischen des Propylen-Polymers mit einem sich thermisch zersetzenden, freie Radikale bildenden Mittel und gegebenenfalls mit mindestens einer funktionell ungesättigten Verbindung bei einer Temperatur von 20 bis 100°C für mindestens 2 Minuten zur Bildung eines vorgemischten Materials erhältlich ist und das vorgemischte Material in einer Schmelzmisch-Vorrichtung bei einer Zylindertemperatur im Bereich von 180 bis 300°C schmelzvermischt wird.

**12.** Extrudierter Gegenstand, umfassend die Polypropylen-Zusammensetzung nach einem von Anspruch 1 bis 11.

**13.** Rohr, umfassend eine Polypropylen-Zusammensetzung nach einem von Anspruch 1 bis 11.

**14.** Rohr nach Anspruch 13, **dadurch gekennzeichnet, dass** das Rohr ein Einschicht-Rohr oder ein Mehrschicht-Rohr ist, wobei mindestens eine Schicht des Mehrschicht-Rohrs die Polypropylen-Zusammensetzung nach einem von Anspruch 1 bis 11 umfasst.

**15.** Rohr nach Anspruch 13 oder 14, **dadurch gekennzeichnet, dass** das Rohr eine gemäß ISO 1167 gemessene Druckprüfleistung von mindestens 350 h bei einer Beanspruchung von 5 MPa und einer Temperatur von 95°C aufweist.

**16.** Verfahren zur Herstellung eines Rohres nach einem der Ansprüche 13 bis 15, umfassend die Schritte von:

a) Mischen der Polypropylen-Zusammensetzung, umfassend die Komponente A, die Komponente B und die wahlweisen Additive unter Verwendung von mechanischen Mischmitteln
und
b) Extrudieren des Polymers zu einer Form eines Rohrs.

**17.** Verwendung einer Polypropylen-Zusammensetzung nach einem von Anspruch 1 bis 11 zur Herstellung eines Einschicht-Rohrs oder mindestens einer Schicht eines Mehrschicht-Rohrs.

## Revendications

**1.** Composition de polypropylène comprenant :

a) un composant A qui est un copolymère de propylène 1 (PC-1) présentant un indice de fluage $MFR_2$, mesuré à 230°C sous une charge de 2,16 kg conformément à la norme ISO 1133, situé dans la plage allant de 0,05 à 0,5 g/10 min,
et
b) un composant B qui est un homopolymère ou un copolymère de propylène ramifié à longue chaîne présentant un indice de fluage $MFR_2$, tel que mesuré à 230°C sous une charge de 2,16 kg conformément à la norme ISO 1133, situé dans la plage allant de 0,5 à 10 g/10 min,
**caractérisée en ce que** cette composition présente
c) une extensibilité à l'état fondu v30 située dans la plage allant de 150 à 250 mm/s, laquelle extensibilité à l'état fondu v30 est mesurée conformément à la norme ISO 16790:2005,
d) une résistance à la pression d'au moins 350 h sous un niveau de contrainte de 5 MPa à 95°C, mesurée conformément à la norme ISO 1167 sur un échantillon de tuyau constitué de ladite composition,
et laquelle composition n'est pas $\beta$-nucléée.

**2.** Composition de polypropylène selon la revendication 1, **caractérisée en ce que** cette composition a une résistance à l'état fondu F30 située dans la plage allant de 30 à 60 cN, laquelle résistance à l'état fondu F30 est mesurée conformément à la norme ISO 16790:2005.

**3.** Composition de polypropylène selon l'une quelconque des revendications 1 et 2, **caractérisée en ce que**

a) le copolymère de propylène 1 (PC-1) possède un comonomère choisi parmi l'éthylène ou les $\alpha$-oléfines en $C_4$ à $C_{20}$, et l'une quelconque de leurs combinaisons,
et/ou
b) le polymère de propylène utilisé dans la préparation du copolymère de propylène ramifié à longue chaîne possède un comonomère dans le copolymère choisi parmi l'éthylène ou les $\alpha$-oléfines en $C_4$ à $C_{20}$, et l'une quelconque de leurs combinaisons.

**4.** Composition de polypropylène selon l'une quelconque des revendications 1 à 3, **caractérisée en ce que**

a) le copolymère de propylène 1 (PC-1) possède une teneur en comonomère située dans la plage allant de 5,0 à 8,0 % en moles,
et/ou
b) le polymère de propylène utilisé dans la préparation du copolymère de propylène ramifié à longue chaîne possède une teneur en comonomère dans le copolymère située dans la plage allant de 3,7 à 7,3 % en moles.

**5.** Composition de polypropylène selon l'une quelconque des revendications 1 à 4, **caractérisée en ce que**

a) le copolymère de propylène 1 (PC-1), qui est un copolymère statistique de propylène, comprend au moins deux fractions :

i) une fraction de masse moléculaire élevée (HMWF) présentant un indice de fluage $MFR_2$ (230°C) situé dans la plage allant de 0,005 à 0,15 g/10 min,
et
ii) une fraction de faible masse moléculaire (LMWF) présentant un indice de fluage $MFR_2$ (230°C) situé dans la plage allant de 0,006 à 5,0 g/10 min,

et/ou

b) l'homopolymère ou copolymère de propylène ramifié à longue chaîne présente

i) une extensibilité à l'état fondu v30 située dans la plage allant de 200 à 275 mm/s, laquelle extensibilité à l'état fondu v30 est mesurée conformément à la norme ISO 16790:2005,
et
ii) une résistance à l'état fondu F30 située dans la plage allant de 18 à 50 cN, laquelle résistance à l'état fondu F30 est mesurée conformément à la norme ISO 16790:2005.

**6.** Composition de polypropylène selon la revendication 5, **caractérisée en ce que** le copolymère de propylène 1 (PC-1), qui est un copolymère statistique de propylène, possède :

a) une teneur en comonomère située dans la plage allant de 4,0 à 7,5 % en moles dans la fraction de masse moléculaire élevée (HMWF),
et
b) une teneur en comonomère située dans la plage allant de 0 à 10,0 % en moles dans la fraction de faible masse moléculaire (LMWF).

**7.** Composition de polypropylène selon la revendication 6, **caractérisée en ce que** le rapport en poids entre la fraction de masse moléculaire élevée (HMWF) et la fraction de faible masse moléculaire (LMWF) est de 65/35 à 35/65.

**8.** Composition de polypropylène selon l'une quelconque des revendications 1 à 7, **caractérisée en ce que** le copolymère de propylène 1 (PC-1) présente une distribution des masses moléculaires située dans la plage allant de 6,0 à 15,0.

**9.** Composition de polypropylène selon l'une quelconque des revendications 1 à 7, **caractérisée en ce que** cette composition de polypropylène comprend :

a) 99,0 à 70,0 % en poids de composant A,
et
b) 1,0 à 30,0 % en poids de composant B,
par rapport à la quantité combinée du composant A et du composant B.

**10.** Composition de polypropylène selon l'une quelconque des revendications 1 à 9, **caractérisée en ce que** cette composition de polypropylène présente un indice de fluage $MFR_2$, tel que mesuré à 230°C sous une charge de 2,16 kg conformément à la norme ISO 1133, situé dans la plage allant de 0,05 à 0,5 g/10 min.

**11.** Composition de polypropylène selon l'une quelconque des revendications 1 à 10, **caractérisée en ce que** l'homopolymère ou copolymère de propylène ramifié à longue chaîne peut être obtenu par mélange du polymère de propylène avec un agent formant des radicaux libres se décomposant thermiquement et éventuellement avec au moins un composé à insaturation fonctionnelle à une température de 20 à 100°C pendant au moins 2 minutes pour former un matériau prémélangé, et mélange à l'état fondu du matériau prémélangé dans un dispositif de mélange à l'état fondu à une température de fût située dans la plage allant de 180 à 300°C.

**12.** Article extrudé comprenant la composition de polypropylène selon l'une quelconque des revendications 1 à 11.

**13.** Tuyau comprenant une composition de polypropylène selon l'une quelconque des revendications 1 à 11.

**14.** Tuyau selon la revendication 13, **caractérisé en ce que** le tuyau est un tuyau monocouche ou un tuyau multicouche, dans lequel au moins une couche du tuyau multicouche comprend la composition de polypropylène selon l'une quelconque des revendications 1 à 11.

**15.** Tuyau selon la revendication 13 ou 14, **caractérisé en ce que** le tuyau a une performance dans un test de pression, mesurée conformément à la norme ISO 1167, d'au moins 350 heures sous un niveau de stress de 5 MPa et à une température de 95°C.

**16.** Procédé pour produire un tuyau selon l'une quelconque des revendications 13 à 15, comprenant les étapes

suivantes :

a) mélange de la composition de polypropylène comprenant le composant A, le composant B et les additifs optionnels par utilisation d'un moyen de mélange mécanique,
et
b) extrusion du polymère sous la forme d'un tuyau.

**17.** Utilisation d'une composition de polypropylène selon l'une quelconque des revendications 1 à 11 pour la fabrication d'un tuyau monocouche ou d'au moins une couche d'un tuyau multicouche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- EP 1382638 A
- EP 1301343 A
- WO 2014095946 A1
- WO 2014173530 A1
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A

### Non-patent literature cited in the description

- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **WANG, W-J. ; ZHU, S.** *Macromolecules,* 2000, vol. 33, 1157
- **M. H. WAGNER.** Rheotens-Mastercurves and Drawability of Polymer Melts. *Polymer Engineering and Sience,* vol. 36, 925-935